# NOUVEAU FASCICULE DE BREVET EUROPEEN

(11) **EP 0 288 584 B2**
(45) Date de publication et mention de la décision concernant l'opposition: **28.01.1998**
(45) Mention de la délivrance du brevet: 24.04.1991
(21) Numéro de dépôt: 86830392.6
(22) Date de dépôt: 30.12.1986
(51) Int. Cl.: B29C 67/00, B29C 53/06, B29K 23/00

(54) **Travail à chaud de plaques alvéolaires en matière plastique**
Warmbeabeitung von Kunststoffstegdoppelplatten
Hot-working of multi-channel thermoplastic plates

(43) Date de publication de la demande: 02.11.1988
(73) Titulaire: Karton S.p.A., I-33070 Caneva (Pordenone) (IT)
(72) Inventeur: Bressan, Matteo, I-33077 Sacile (PN) (IT)
(74) Mandataire: Fiammenghi-Domenighetti, Delfina

(56) Documents cités:
- EP-A- 0 083 030
- WO-A-86/05159
- BE-A- 661 790
- DE-A- 3 318 937
- DE-C- 725 403
- FR-A- 1 254 443
- FR-A- 2 059 046
- IT-A- 4 570 283
- JP-A- 4 820 036
- US-A- 3 387 330
- US-A- 4 265 842
- US-A- 4 356 053
- US-A- 4 515 648
- PATENT ABSTRACTS OF JAPAN, vol. 8, no. 158 (M-311)[1595], 21 juillet 1984; & JP-A-59 52 612 (TOYOTA DANBOORU KOGYO K.K.) 27-03-1984
- PATENT ABSTRACTS OF JAPAN, vol. 10, no. 189 (M-494)[2245], 3 juillet 1986; & JP-A-61 32 738 (LION CORP.) 15-02-1986

## Description

L'invention a pour objet un appareil suivant le préambule de la revendication 1, pour la réalisation par thermoformages périmètraux ou superficiels de parties des éléments structuraux ou plaques en propylène ou en thermoplastiques analogues, extrudés à formation alvéolaire, pour realiser des emballages et pour usages divers, et qui comporte des équipments à actions de glissement ou de roulement pour profiler à chaud aux limites de fusion les parties structurales intéressées desdites plaques, et les moyens de mouvement, à vitesse appropriée, des appareils de profilage et des pièces à travailler. Par propylène on entend l'un des polyamide-plastomères dérivés de résines de polycondensation, ayant les masses plastiques dotées de caractéristiques particulièrs telles que: un poids spécifique très faible, une excellente rigidité et une forte résistance à la température, et en particulier à l'action des chocs, aux produits chimiques et aux réactifs organiques et inorganiques.

Comme on sait, lesdits plastomères possèdent un point de fusion bien défini, ce qui fait qu'à cette limite, ils deviennent instantanément plastiques.

Pour l'elevée rigidité diélectrique, et autant de résistivité électrique, il est très difficile d'obtenir une cohésion étendue et solide des parties unies entre elles, par soudures, à ultra-sons ou à haute fréquence, utilisées généralement pour l'union de thermoplastiques laminés différents, parmi entre lesquelles les divers polythènes ou les plaques en PVC, etc. sont réliées.

Dans le cas spécifique de la soudure des plaques en propylène ou en polypropylène extrudées à structures cellulaires, ou alvéolaires selon la dénomination conventionelle, il est impossible de fermer, à la périphérie ou dans les secteurs intéressés, les alvéoles ouverts. La fermeture hermétique et durable est nécessaire pour empêcher que la poussière ou des substances étrangères, quelle que soit leur nature, ne pénètrent pas à l'intérieur des parois alvéolées excrudées. L'occlusion des alvéoles rend en outre les produits bien plus résistants à la torsion, à la flexion et aux grâce à la création d'espaces clos, remplis d'air, qui forment des coussins étanches élastiques, indépendants les uns des autres.

Si l'on part du principe qui une fermeture est possible par ultrasons ou à haute fréquence, les puissances nécessaires seraient tellement élevées qu'il serait impossible d'utiliser cette méthode à cause de son prix de revient et du danger qu'elle représenterait pour le personel préposé au travail.

EP-A-0083030, se réfère à un procédé et à un appareil pour obtenir, en partant d'une bande continue, alvéolée, extrudée d'une matière plastique, telle qui un polymétacrylate (plexiglas), ou un polycarbonate vitreux-transparent (Makrolon), une pluralité de plaques ou de panneaux, en réalisant des lignes transversales d'écrasement et de coupe, qui sont obtenues lorsque la bande, qui avance pas-à-pas d'une manière continue, vient d'être arrêtée.

L'appareil comporte des lampes de chauffage, des parois réfléchissantes, qui renvoient des rayons réflets sur la zone transversale de coupure de la bande, et deux pistons à extrémitées profilées, travaillant selon des courses alternatives opposées le long de la dite ligne transversale de coupure de la bande alveolée, et qui d'abord écrasent et par la suite coupent transversalement la bande pour l'obtention du bord postérieur du panneau qui vient d'être séparé et du bord antérieur du panneau à séparer. Ces bords seront ainsi écrasés et fermés prènant une forme laminaire. ET-A-4570283 revèle un dispositif sur lequel la préambule de la revendication 1 se buse

La présente invention a pour object un appareil pour le thermoformages des bords de panneaux ou plaques alvéolées obtenus d'une matière plastique, telle que le propyléne, en vue d'obtenir des bords fermés, à tenue étanche, et d'une forme à coupe essentiellement semi-circulaire.

Cet appareil permet d'obtenir la profilage par thermofusion et la fermeture des alvéoles d'extrudées à structures creuses et il est basé sur les propriétés des plastomères en question.

En effet, lorsqu'll atteint son précis point de fusion, le propylène ne perd pas ses caractéristiques chimiques mais il donne lieu d'obtenir des jonctions mutuelles entre les parties structurales des pièces assemblées.

Compte tenu de sa grande résistance à l'étirement, on peut facilement soumettre les plaques à la traction nécessaire pour les thermo-profilages effectués grâce à des groupes chauffés à des températures bien contrôlées, qui agissent sur les parties intéressées.

Les avantages obtenus par cette invention consistent essentiellement sur le fait que l'appareil permet la fabrication industrielle d'éléments à structure alvéolaire, a bords fermés longitudinalement.

L'invention permet la fabrication de produits, dont les coefficients de résistance aux à la torsion, à la flexion et à la traction sont remarquablement augmentés par la formation des cavités ou chambres étanches, qui ne permettent aucune entrée de substances étrangères ou la formation de moisissures ou d'autres formes sporigènes. L'uniformité structurale périphérique, réalisée à l'aide d'une thermofusions et façonnages susnommées, fait en sorte que les angles sont arondis et ne créent aucun problème pour l'application d'intermédiaires d'emballages, comme des plastiques thermorétractiles ou autres.

L'invention est exposée ci-après plus en détail à l'aide d'un dessin représentant, à titre d'example, des formes d'exécution de l'appareil de l'invention.
La Figure 1 représente schématiquement un groupe pour le thermoprofilage des bords de plaques, à structure alvéolaire.
La Figure 2 représente d'une manière schematique l'arrangement, d'un dispositif pour l'exécution d'incisions pour des pliures, sur les surfaces principales des plaques en même temps que le façonnage des bords;
La Figure 3 montre une forme de réalisation d'un dispositif à rotation adjustable pour un profilage périmétral des bords de la plaque, selon la présente invention
La Figure 4 se réfère à une autre forme de réalisation d'un dispositif à rotation, pour l'exécution d'incisions sur les surfaces des plaques.

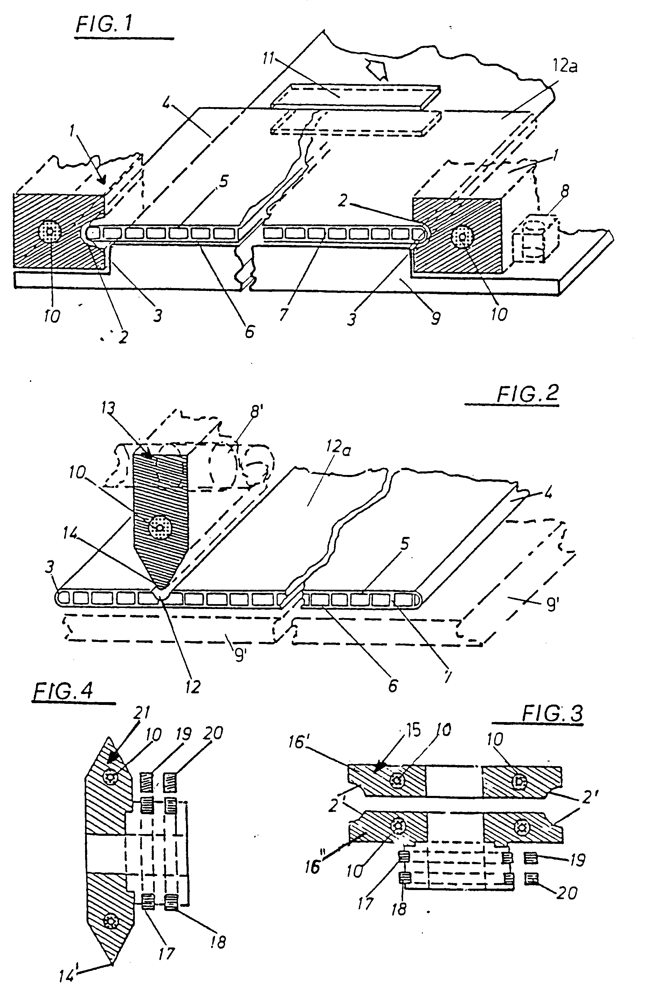

Les Figures 1 à 4 représentent, les dispositifs et les produits qui ou peut fabriquer au moyen de l'appareil de travail par thermofusion et façonnage des éléments structuraux ou plaques en propylène ou en termoplastiques analogues, à formation alvéolaire, indiquées pour emballages et usages divers.

La Figure 1 montre d'une manière schematique des profileurs 1, qui servent à profiler a paire de bords opposés de chaque plaaue 4 par une action progressive de gorges ou cavitiés cylindriques 2, reliées avec chaque bord 3.

Conformément à la présente invention, deux groupes de profilage 1, qu'on peut déplacer grâce aux dispositifs de réglage 8, sont appliqués et en corrélation sur le plan d'appui et de glissement 9 et comportent des générateurs thermiques intérieurs 10, comme des résistances 10 électriques indiquées dans l'exemple de la figure 1.

Comme l'indique la figure 2, la plaque 4 peut être munie, sur au moins une des surfaces principales 12a de rainures 12, en même temps que sont réalisés les profilages périmétraux à l'aide d'un dispositif 13 muni d'une partie inférieure saillante 14 qui est effilée, chauffée par des résistances électiques intérieures 10 opérantes à températures côntrolées par des thermostats appropriés.

La figure 3 montre un dispositif profleur 15 à action rotative et en forme de galet, selon l'invention qui est séparé en deux moitiés 16-16 par rapport au plan de symétrie, pendiculaire de l'axe de rotation du galet 15, chaque demigorge ayant une coupe tranversale en forme d'un arc de 90° de même rayon, de manière que la gorge 16'-16'' a une forme enregistrable, pour l'exécution des profils périmétraux, au moyen de la chaleur produite par les résistances 10 installées à l'intérieur des corps 16-16 et alimentées par les balais 19 et 20, en contact avec les collecteurs 17 et 18 reliés aux résistances 10.

La figure 4, conformément à la présente invention, indique un dispositif d'incision 21, lui aussi à action rotative, muni, comme le précédent, de résistances intérieures 10 reliées aux anneaux 17 et 18, et alimentées par les balais 19 et 20, dont la forme d'incision est donnée par une saillie annulaire 14' en forme de coin, ou selon le type de profil désiré sur la plaque 4, évidemment aussi au cours de la phase de profilage latéral.

Pour obtenir les profilages périphériques sur plusieurs plaques 4 en même temps, on agit sur une pile de plaques 4, bloquées entre elles en utilisant des profileurs 1, 15 ayant plusieures gorges 2, 2' et montés sur le plan de travail 9.

Il est évident que les profilages, qu'ils soient simples ou multiples, sont effectués dans les deux sens simultanément, arondissant les angles des bords à l'aide de contreprofileurs correspondant, comme il est évident, l'incision superficielle à dessin correspondant au relief sur le dispositif de gravure.

## Revendications

1. Appareil pour la réalisation par thermoformages périmètraux ou superficiels de panneaux (4), à structure alvéolaire et constitués par deux parois extérieures parallèles (5, 6), reliées entre elles par une pluralité de parois intérieures parallèles (7), perpendiculaires aux parois (5, 6), de manière à former une pluralité de chambres intérieures tubulaires ou alvéolaires, qui sont ouvertes à leurs extrémités, les panneaux (4) étant en propylène ou matières thermoplastiques analogues, et obtenus par extrusion à chaud, en forme d'une bande continue de laquelle on obtient, à l'aide de coupes longitudinales et transversales, lesdits panneaux (4) de dimensions choisies, et dans lesquels, à l'aide d'une opération de profilage à chaud, on obtient la fermeture à étancheité et le façonnage des paires de bords périphériques parallèles de chaque panneau (4), en faisant progressivement approcher, courber et relier entre eux, d'une manière étanche, les bords des parois extérieures (5, 6) des panneaux (4), à l'aide de moyens réchauffeurs et de moyens profileurs ou pour l'obtention d'une ou de plusieurs rainures sur la, ou les surfaces principales des panneaux (4), ledit appareil comprenant:
- un plan d'appui (9) pour soutenir au moins un panneau (4) à traiter;
- des moyens d'ajustement (8) des moyens profileurs
- un dispositif (11) relié à des mécanismes actionneurs capables de faire glisser le ou les panneaux (4) le long de son ou de leur plan d'appui (9) dans la direction des bords du panneau à profiler et/ou des lignes d'incision à réaliser;
caractérisé en ce que
lesdits moyens réchauffeurs et lesdits moyens profileurs sont constitués par des dispositifs réchauffeurs-profileurs (15 - 21) incorporant des résistances électriques (10); lesdits dispositifs réchauffeurs-profileurs pour le faconnage des bords du panneau, montés sur le plan d'appui (9), parallèles l'un à l'autre et avec des dispositions spéculairement opposées, sont constitués par des galets (15) supportés, par l'intermédiaire de lesdits dispositifs d'ajustement (8), par des arbres ayant leurs axes perpendiculaires au plan d'appui (9') et à la direction de mouvement du panneau (4), et maintenus en contact avec les bords opposés du panneau (4) à l'aide d'une action de frottement de roulement; lesdits galets, dans un face latérale desquelles on a obtenu une gorge annulaire (2'), ayant une section axiale complémentaire de la section transversale du gabarit de profilage (3) des bords du panneau à réaliser; lesdits moyens réchauffeurs-profileurs utilisés pour l'obtention d'une ou plusieurs rainures sur au moins une surface du panneau (4) sont constitués par des galets (21) supportés, par l'intermédiaire de lesdits dispositifs d'ajustement (8'), par des arbres ayant leurs axes parallèles au plan d'appui (9') et perpendiculaires à la direction de mouvement du panneau (4), comportant un bord périphérique annulaire saillant (14'), complémentaire par rapport à la rainure qu'on se propose à réaliser.

2. Appareil selon la revendication 1, caractérisé en ce que chaque galet (15) constituant lesdits dispositifs réchauffeurs-profileurs pour le façonnage des bords du panneau est séparé en deux moitiés (16', 16'') par rapport au plan de symétrie, perpendiculaires à l'axe de rotation du galet (15), chaque demi-gorge ayant pratiquement une section axiale arquée de 90°, étant obtenue respectivement l'une dans une et l'autre des deux moitiés (16', 16'') du galet (15).

3. Appareil selon la revendication 1, caractérisé en ce que les dispositifs réchauffeurs-profileurs (1, 15) sont pourvus de gorges parallèles multiples (2, 2'), de façon à pouvoir profiler, pendant chaque cycle de travail, en même temps, les bords ou des parties de bords de plusieurs panneaux (4) superposés, des dispositifs d'entraînement étant pourvus pour permettre de faire déplacer solidairement tout le paquet de panneaux superposés, le long du plan d'appui (9).

## Claims

1. Apparatus for the production by perimetric or surface heat shaping, of panels (4) having a cellular structure embodied by two parallel outer walls (5,6) interconnected by a large number of internal parallel walls (7) perpendicular to the outer walls (5,6) so as to form a number of open-ended internal tubular or alveolar chambers, the panels (4) being made of propylene or similar thermoplastics and being obtained by hot extrusion in the form of a continuous strip from which the panels (4) of selected dimensions are prepared by means of longitudinal and transverse cuts, pairs of parallel peripheral edges of each panel (4) being closed in sealing-tight manner and shaped by means of a hot profiling operation by progressively moving towards one another, bending and interconnecting hermetically the edges of the outer walls (5,6) of the panels (4), through the agency of heating means and profiling means or to contrive one or more grooves in the or each major surface of the panels (4), said apparatus comprising:
- a support surface (9) adapted to support at least one panel (4) to be treated;
- adjusting means (8) of the profiling means;
- means (11) connected to actuating mechanisms adapted to slide the or each panel (4) along its or their support surface (9) in the direction of the edges of the panel to be shaped and or the direction of the required scoring lines; characterized in that said heating means and said profiling means are formed by means (15-21) for simultaneously heating and profiling, which include electric resistances (10); said means for simultaneously heating and profiling, used to shape the edges of the panel, being mounted on the support surface (9), parallel and facing each other and being formed by rollers (15) which are supported, with the aid of said adjusting means (8), by shafts whose axes extend perpendicular to the support surface (9') and to the direction of the panel (4) movement, said simultaneous heating and profiling means being maintained in contact with the opposite edges of the panel (4) by means of a rolling friction action; said rollers, formed in their lateral surface with an annular groove (2'), having an axial section companion to the cross section of the profiling outline (3) of the required panel edges; said means for simultaneously heating and profiling, used to obtain one or more grooves on at least one surface of the panel (4), being formed by rollers (21) supported, with the aid of said adjustment means (8'), by shafts having their axes parallel to the support surface (9') and perpendicular to the direction of panel (4) movement, and comprising a projecting peripheral annular edge (14'), with a companion section with respect to the groove to be obtained.

2. Apparatus according to claim 1, characterized in that each roller (15) forming said heating and profiling means for shaping the panel edges, is divided into two halves (16', 16'') with respect to the plane of symmetry perpendicular to the rotational axis of the roller (15), each half-groove having an arcuate axial section of 90° and being formed respectively in each of the two halves (16', 16'') of the roller (15).

3. Apparatus according to claim 1, characterized in that the means (1, 15) for simultaneously heating and profiling, are provided with a number of parallel grooves (2, 2') to enable the edges or parts thereof, of a number of different superimposed panels (4), to be profiled simultaneously in each operating cycle, drive means being provided to enable the complete group of superimposed panels to be moved unitarily along the support surface (9).

## Patentansprüche

1. Vorrichtung zur Gestaltung von Platten (4) mittels Warmbearbeitung ihrer Umfänge oder Oberflächen, wobei die Platten eine zellige Struktur besitzen und durch zwei parallele Außenwände (5,6) gebildet sind, welche durch eine Vielzahl von parallelen und zu den Wänden (5,6) senkrechten Innenwänden (7) miteinander verbunden sind, um eine Vielzahl von rohrförmigen oder zelligen, an ihren Enden offenen Innenkammern zu bilden, wobei die Platten (4) aus Propylen oder dgl. thermoplastischen Materialen bestehen und durch Warmextrudieren in Form eines kontinuierlichen Bandes hergestellt werden, aus dem mit Hilfe von Längs-und Querschnitten, die Platten (4) gewählter Abmessungen erhalten werden, an welchen Platten durch Warmbearbeitung mit Hilfe von Heizeinrichtungen und von Formgebungseinrichtungen der dichte Abschluß und die Profilierung von Paaren paralleler Umfangsränder jeder Platte (4) erzielt wird, indem die Ränder der Außenwände (5,6) der Platte (4) einander nach und nach durch die Formgebungsmittel und durch die Heizeinrichtungen genähert, gebogen und miteinander verbunden werden, derart daß sie einen dichten Abschluß bewirken, oder auf der oder den Hauptflächen der Platten (4) eine oder mehrere Kerblinien erhalten werden, wobei die Vorrichtung
- eine Auflageebene (9) zum Abstützen mindestens einer zu behandelnden Platte (4) umfaßt;
- Einstellmittel (8) für die Formgebungseinrichtungen aufweist, sowie
- eine Einrichtung umfaßt, die mit Betätigungsmechanismen verbunden ist, die imstande sind, die Platten (4) längs ihrer Auflagebene bzw. Ebenen (9) in Richtung der zu formenden Ränder der Platte und/oder der auszubildenden Einschnittlinien zu verschieben,
dadurch gekennzeichnet, daß die genannten Heizeinrichtungen und die genannten Formbegungseinrichtungen durch Einrichtungen (15-21) zur gleichzeitigen Formgebung und Heizung gebildet sind, welche elektrische Widerstände enthalten; die Einrichtungen zur gleichzeitigen Formgebung und Heizung, welche für die Gestaltung der Plattenränder dienen, und auf die Auflageebene (9) in spiegelbildlich einander gegenüber liegenden und parallelen Anordnung angebracht sind, durch Rollen (15) gebildet werden, deren Achsen senkrecht zur Auflageebene (9') und zur Bewegungsrichtung der Platte (4) verlaufen, und durch eine Rollreibungswirkung in Kontakt mit den entgegengesetzten Rändern der Platte (4) gehalten werden; die genannten Rollen, in deren Seitenfläche eine Ringnut (2') aufweisen, mit einem zu dem Querschnitt des Profils (3) der auszubildenden Ränder der Platte komplementären Axialschnitt; die genannten Einrichtungen zur gleichzeitigen Heizung und Formgebung für die Erhaltung von mindestens einer Kerblinie auf mindestens einer Hauptfläche der Platte (4), durch Rollen (21) gebildet sind, welche durch von den genannten Einstelleinrichtungen (8') abgestützten Wellen getragen werden, deren Achsen parallel zur Auflageebene (9') und senkrecht zur Bewegungsrichtung der Platte (4) liegen, wobei diese Rollen einen ringförmigen Umfangsvorsprung (14') aufweisen, welcher eine zu dem Querschnitt des Einschnitts komplementäre Form bildet.

2. Vorrichtung nach Anspruch 1, dadurch gekennzeichnet daß jede Rolle (15) die die genannten Einrichtungen zur gleichzeitigen Heizung und Formgebung für die Gestaltung der Plattenränder bildet, in zwei Hälften (16', 16'') bezogen auf die senkrecht zur Drehachse der Rolle (15) verlaufende Symmetrieebene, geteilt ist, wobei jede Ringnuthälfte praktisch einen Axialschnitt mit einem Bogen von 90° besitzt, der in der einen bzw. in der anderen der beiden Hälften (16', 16'') der Rolle (15) ausgebildet ist.

3. Vorrichtung nach Anspruch 1, bei welcher die Heiz-Formgebungseinrichtungen (1 und 15) mit parallelen Mehrfachnuten (2,2') versehen sind, um während jedes Arbeitszyklus gleichzeitig die Ränder mehrerer übereinander angeordneter Platten profilieren zu können, wobei Antriebseinrichtungen vorgesehen sind, um die Verschiebung des ganzen Pakets übereinander angeordneter Platten in einem längs der Auflageebene (9) zu ermöglichen.
